# EUROPEAN PATENT SPECIFICATION

(11) **EP 1 730 230 B1**
(45) Date of publication and mention of the grant of the patent: **09.05.2012**
(21) Application number: 05717131.6
(22) Date of filing: 23.03.2005
(51) Int. Cl.: C08L 23/04

(54) **POLYETHYLENE BLENDS WITH GOOD CONTACT TRANSPARENCY**
POLYETHYLENBLENDS MIT GUTER KONTAKTTRANSPARENZ
MELANGES DE POLYETHYLENE AYANT UNE BONNE TRANSPARENCE DE CONTACT

(30) Priority: 29.03.2004 EP 04007550
(43) Date of publication of application: 13.12.2006
(73) Proprietor: TOTAL PETROCHEMICALS RESEARCH FELUY, 7181 Seneffe (Feluy) (BE)
(72) Inventor: VAN SINOY, Alain, 1450 Chastre (BE); KOULIC, Christian, B-4257 Berloz (BE); STEPHENNE, Vincent, B-1330 Rixensart (BE)
(74) Representative: Leyder, Francis
(86) International application number: PCT/EP2005/051336
(87) International publication number: WO 2005/092973

(56) References cited:
- EP-A- 1 319 685
- US-A- 5 338 589
- US-B1- 6 355 733
- US-B1- 6 649 698

## Description

This invention relates to the production of polyethylene blends having good optical and mechanical properties suitable for use in blow moulding applications.

For many applications, polyethylene with enhanced toughness, strength and environmental stress cracking resistance (ESCR) is important. These enhanced properties are more readily attainable with high molecular weight polyethylene. However, as the molecular weight of the polymer increases, the processability of the resin decreases. By providing a polymer with a broad or bimodal MWD, the desired properties that are characteristic of high molecular weight resin are retained while processability, particularly extrudibility, is improved.

There are several methods for the production of bimodal or broad molecular weight distribution resins: melt blending, reactor in series configuration, or single reactor with dual site catalysts. Use of a dual site catalyst for the production of a bimodal resin in a single reactor is also known.

Chromium catalysts for use in polyolefin production tend to broaden the molecular weight distribution and can in some cases produce bimodal molecular weight distribution but usually the low molecular part of these resins contains a substantial amount of the comonomer. Whilst a broadened molecular weight distribution provides acceptable processing properties, a bimodal molecular weight distribution can provide excellent properties. In some cases it is even possible to regulate the amount of high and low molecular weight fraction and thereby regulate the mechanical properties.

Ziegler Natta catalysts are known to be capable of producing bimodal polyethylene using two reactors in series. Typically, in a first reactor, a low molecular weight homopolymer is formed by reaction between hydrogen and ethylene in the presence of the Ziegler-Natta catalyst. It is essential that excess hydrogen be used in this process and, as a result, it is necessary to remove all the hydrogen from the first reactor before the products are passed to the second reactor. In the second reactor, a copolymer of ethylene and hexene is made so as to produce a high molecular weight polyethylene. The reverse configuration can also be used.

Metallocene catalysts are also known in the production of polyolefins. For example, EP-A-0619325 describes a process for preparing polyolefins such as polyethylene having a multimodal or at least bimodal molecular weight distribution. In this process, a catalyst system that includes at least two metallocenes is employed. The metallocenes used are, for example, a bis(cyclopentadienyl) zirconium dichloride and an ethylene bis(indenyl) zirconium dichloride. By using the two different metallocene catalysts in the same reactor, a molecular weight distribution that is at least bimodal can be obtained. Alternatively, a single metallocene catalyst component can be used in two serially connected loop reactors operated under different polymerisation conditions: for example, the low molecular weight fraction is prepared in the first loop reactor in the presence of hydrogen and the high molecular weight fraction is prepared in the second loop reactor in the presence of a comonomer, or vice versa.

Several resins or resin blends have been used in blow moulding applications, but none of them provide an excellent compromise of contact transparency, gloss, impact resistance, good processing, environmental stress crack resistance (ESCR) and rigidity. For example, most high density polyethylene (HDPE) lack contact clarity and gloss. Metallocene-prepared high density polyethylene (mHDPE) having densities larger than 0.940 g/cm³ lack ESCR, whereas metallocene-prepared medium density polyethylene (mMDPE) having densities ranging from 0.930 to 0.940 g/cm³ lack rigidity.

EP-A-1319685 discloses blends of first high-molecular weight metallocene-produced linear low density polyethylene (mLLDPE) having a density of from 0.920 to 0.940 g/cm³ and a HLMI of from 0.05 to 2 dg/min and a second high density polyethylene (HDPE) prepared either with a Ziegler-Natta or with a chromium-based catalyst, said second polyethylene having a density ranging from 0.950 to 0.970 g/cm³ and a HLMI of from 5 to 100 dg/min. These blends show improved stress crack resistance and impact strength and are therefore used in applications where these properties are of particular importance, such as jerry cans, drum, intermediate bulk containers or heating fuel tanks. However, EP-A-1319685 is silent on improved optical properties.

It is also known that coextrusion is detrimental to transparency, that resins like PET cannot provide a broad range of container shapes, that clarified polypropylene has low impact resistance and poor processing capabilities.

There is thus a need to provide resins having an improved compromise between optical and mechanical properties as well as good processing capabilities.

It is an aim of the present invention to provide a polyethylene composition having good contact transparency and gloss.

It is another aim of the present invention to provide a polyethylene blend having high environmental stress crack resistance and rigidity.

It is also an aim of the present invention to provide a polyethylene blend having good processing capabilities.

It is yet another aim of the present invention to provide a polyethylene blend having an excellent compromise between optical properties of gloss and contact transparency and mechanical properties of ESCR and rigidity.

It is yet a further aim of the present invention to provide a resin having a multimodal molecular weight distribution and a processing behaviour similar to that of chromium-based resins.

Accordingly, the present invention provides a process for preparing a polyethylene resin composition having a multimodal molecular weight distribution that comprises the steps of:
(i) providing from 20 to 50 wt% of a first metallocene-produced linear low density polyethylene (mLLDPE) resin having a density of from 0.920 to 0.940 g/cm³ and a melt index MI2 of from 0.1 to 10 dg/min;
(ii) providing from 50 to 80 wt% of a second bi- or multi-modal polyethylene resin prepared either with a Ziegler-Natta or with a metallocene catalyst system, said polyethylene having a density ranging from 0.940 to 0.970 g/cm³ and a melt index MI2 of from 0.05 to 10 dg/min;
(iii) physically blending together the first and second polyethylenes to form a polyethylene resin having a multimodal molecular weight distribution, a density ranging from 0.935 to 0.960 g/cm³ and a MI2 of from 0.2 to 0.9 dg/min
   with the melt index MI2 measured by the procedure of ASTM D 1238 using a load of 2.16 kg at a temperature of 190°C and the density measured at 23°C by the procedures of standard test ASTM D 1505.

In this specification, the melt indices MI2 and HLMI (High Load Melt Index) are measured by the procedures of ASTM D 1238 using a load respectively of 2.16 and 21.6 kg at a temperature of 190 °C, and the density is measured at 23 °C by the procedures of standard test ASTM D 1505.

Preferably, the blend comprises from 20 to 50 wt% of the first metallocene-prepared polyethylene resin and from 50 to 80 wt% of the multimodal polyethylene resin.

The amount of each polyethylene component in the blend is of about 50wt%.

The most preferred blends according to the present invention comprise:
- either about 50 wt% of a metallocene-produced polyethylene and about 50 wt% of a bimodal Ziegler-Natta polyethylene;
- or about 20 wt% of the first metallocene-produced resin and about 80 wt% of a bimodal Ziegler-Natta polyethylene.

The first polyethylene resin is monomodal and is produced with a metallocene catalyst system. The second polyethylene resin has a multimodal molecular weight distribution and may be produced using either a Ziegler-Natta catalyst system or a metallocene-based catalyst system: it may be produced using two or more of those different catalyst systems in a single reactor or alternatively, it may be produced with a single catalyst system in two or more serially connected loop reactors operated under different polymerisation conditions. Preferably, the second polyethylene is prepared with a Ziegler-Natta catalyst system.

The final polyethylene resin has a broad or multimodal molecular weight distribution and is produced by physically blending the first and second polyethylene resins.

The use of a metallocene catalyst component enables the preparation of a linear low-density polyethylene fraction having a very narrow molecular weight distribution. This yields both improved slow and rapid crack propagation properties as a result of a high and uniform level of comonomer distribution in the low density fraction. The density is preferably not more than 0.940 g/cm³, and more preferably of at most 0.935 g/cm³: this is somewhat lower than the low density fractions achievable by Ziegler-Natta or chromium based catalysts, particularly when used in a slurry loop process. Thus the use of this metallocene catalyst enables precise control of the molecular weight distribution and density of the high molecular weight fraction of the resin, yielding improved mechanical properties. The melt index MI2 is preferably of from 0.5 to 5 dg/min. It is preferred that the melt index of the metallocene-prepered polyethylene component is larger than that of the bimodal polyethylene component in order to obtain good optical properties.

The molecular weight distribution is defined by the polydispersity index D that is equal to the ratio Mw/Mn of the weight average molecular weight Mw over the number average molecular weight Mn.

The second polyethylene resin has a bi- or multi-modal molecular weight distribution and is produced by ethylene homo and/or copolymerisation in the presence of a Ziegler-Natta catalyst system and/or a metallocene-based catalyst system. Preferably it is a Ziegler-Natta-based polyethylene resin having a bimodal molecular weight distribution.

Preferably, the density of the final resin is of from 0.940 to 0.950 g/cm³ and more preferably of about 0.945 g/cm³. Preferably, the melt index MI2 is of from 0.4 to 0.7 dg/min and more preferably of about 0.5 dg/min. The resins consist not only of the high molecular weight fraction, but also a low molecular weight fraction whereby the resins as a whole have a broad or multimodal molecular weight distribution. The provision of such a multimodal distribution yields a combination of improved mechanical properties of the resin, without compromising the processability. In addition, the optical properties of gloss and contact transparency are excellent.

The first and second polyethylene resins constitute separately produced resins which are then physically blended to form the composite polyethylene resin having a multimodal molecular weight distribution. The production of the polyethylene comprising the lower molecular weight fraction of the composite resin can be controlled to give the desired processing properties for the resin. It has been shown that the combination of low branching (ideally no branching) in the low molecular part of the resin and high comonomer incorporation in the high molecular part significantly improves the resin properties with respect to resistance to slow crack growth and impact strength. In addition, the processing properties of the blend according to the preferred embodiments of the present invention are excellent and similar to those of chromium-based polyethylene resins. The rigidity, the sag and the melt fracture are improved by the presence of the Ziegler-Natta resin whereas the optical properties are improved by the presence of the metallocene-based resin. It has been observed however that the swell and sag properties are not a linear function of the amount of Ziegler-Natta resin included in the blend.

### Metallocene component for the preparation of the low density Polyethylene resin.

The metallocene catalyst component used in the present invention is preferably a bis(tetrahydroindenyl) metallocene component of general formula I

R"(THI)₂MQ₂ (I)

wherein THI is a tetrahydroindenyl that may be substituted in the same way or differently from one another at one or more positions in the cyclopentadienyl ring, the cyclohexenyl ring and the ethylene bridge, R" is a bridge imparting stereorigidity between the two cyclopentadienyl rings, M is a metal group 4 of the Periodic Table (Handbook of Chemistry, 76^{th} edition) and each Q is the same or different and may be a hydrocarbyl or hydrocarboxy radical having 1-20 carbon atoms or a halogen.

Each substituent group on the tetrahydroindenyl may be independently chosen from those of formula XRᵥ in which X is chosen from group IVA, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R as hydrogen or CH3. More preferably, at least one and most preferably both cyclopentadienyl rings are unsubstituted.

In a particularly preferred embodiment, both indenyls are unsubstituted.

Preferably, the bridge R" that is a methylene or ethylene bridge either substituted or unsubstituted.

The metal M is preferably zirconium, hafnium or titanium, most preferably zirconium.

Suitable hydrocarbyls for Q include aryl, alkyl, alkenyl, alkylaryl or aryl alkyl. Each Q is preferably halogen.

Ethylene bis(4,5,6,7-tetrahydro-1-indenyl) zirconium dichloride is a particularly preferred bis tetrahydroindenyl compound of the present invention.

Another suitable metallocene catalyst component that can be used in the present invention is a bis-cyclopentadienyl of formula II

bis(n-buty)-Cp)MQ₂ (II)

Wherein M and Q are as defined above.

The preferred metallocene component is a tetrahydroindenyl.
The metallocene catalyst component used in the present invention can be prepared by any known method. A preferred preparation method for preparing the tetrahydroindenyl component is described in J. Org. Chem. 288, 63-67 (1985).

The activating agent used to activate the metallocene catalyst component can be any activating agent having an ionising action known for this purpose such as aluminium-containing or boron-containing compounds. The aluminium-containing compounds comprise alumoxane, alkyl aluminium and/or Lewis acid. The alumoxanes are well known and preferably comprise oligomeric linear and/or cyclic alkyl alumoxanes represented by the formula: 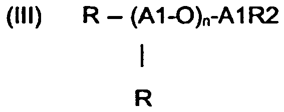 for oligomeric, linear alumoxanes and 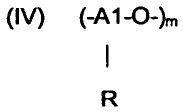 for oligomeric, cyclic alumoxane,
wherein n is 1-40, preferably 10-20, m is 3-40, preferably 3-20 and R is a C₁-C₈ alkyl group and preferably methyl.

Suitable boron-containing cocatalysts may comprise a triphenylcarbenium boronate such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

The metallocene catalyst system may be employed in a solution polymerisation process, which is homogeneous, or a slurry process, which is heterogeneous. In a solution process, typical solvents include hydrocarbons with 4 to 7 carbon atoms such as heptane, toluene or cyclohexane. In a slurry process it is necessary to immobilise the catalyst system on an inert support, particularly a porous solid support such as talc, inorganic oxides and resinous support materials such as polyolefin. Preferably, the support material is an inorganic oxide in its finally divided form.

Suitable inorganic oxide materials which are desirably employed in accordance with this invention include Group 2a, 3a, 4a or 4b metal oxides such as silica, alumina and mixtures thereof. Other inorganic oxides that may be employed either alone or in combination with the silica, or alumina are magnesia, titania, zirconia. Other suitable support materials, however, can be employed, for example, finely divided functionalised polyolefins such as finely divided polyethylene. Preferably, the support is silica having a surface area comprised between 200 and 900 m²/g and a pore volume comprised between 0.5 and 4 cm³/g_{.}

The amounts of activating agent and metallocene usefully employed in the preparation of the active catalyst system can vary over a wide range. Preferably the mole ratio of aluminium or boron to transition metal is in the range between 1:1 and 100:1, preferably in the range 5:1 and 50:1.

Where the polymerisation reaction is performed in slurry, a reaction temperature is in the range 70 °C to 110 °C may be used. Where the reaction is performed in solution, by selection of a suitable solvent a reaction temperature in the range 150 °C to 300 °C may be used. The reaction may also be performed in the gas phase using a suitably supported catalyst.

The amount of hydrogen introduced in the reactor depends upon the desired final melt index of the resin and upon the nature of the metallocene catalyst component.

The MI2 of the lineair low density polyethylene resin made in accordance with the present invention typically falls in the range 0.1 to 1 dg/min, preferably in the range 0.5 to 5 dg/min. The density is typically in the range 0.920 to 0.940 g/ml. The polydispersity D is in the range 2 to 4.5, preferably around 3 and more preferably the resin partially has long chain branches to facilitate processing.

### Ziegler-Natta catalyst system for the preparation of a bimodal polyethylene resin.

The Ziegler-Natta catalyst preferably consists of a transition metal component (compound A) which is the reaction product of an organomagnesium compound with a titanium compound and an organoaluminium component (compound B).

For preparing compound A,
- suitable titanium compounds can be selected from tetravalent halogenated titanium compounds, preferably titanium compounds of the general formula TiXₙ(OR)₄₋ₙ in which n is 1 to 4, X stands for chlorine or bromine, and R for identical or different hydrocarbon radicals, especially straight-chain or branched alkyl groups having 1 to 18, preferably 1 to 10, carbon atoms,;
- suitable organomagnesium compounds can be selected from magnesium alcoholates, preferably those of the general formula Mg(OR)₂, in which R stands for identical or different hydrocarbon radicals, preferably straight-chain or branched alkyl groups having 1 to 10 carbon atoms; magnesium alcoholates having alkyl groups from 1 to 4 carbon atoms are preferred.

The preferred titanium compound is TiCl₄.

This reaction is advantageously carried out at temperatures of from 0 to 200 °C, the upper temperature limit being determined by the decomposition temperature of the tetravalent halogenated titanium compound used; it is advantageously carried out at temperatures of from 60 to 120 °C.

Subsequently, the reaction product of magnesium alcoholate and tetravalent halogenated titanium compound which is insoluble in hydrocarbons is freed from unreacted titanium compound by washing it several times with one of the above inert diluents in which the titanium-(IV)-compound used is readily soluble.

The titanium contents of compound A may be within the range of from 0.05 to 10mg.-atom, per gram of compound A. It can be controlled by the reaction time, the reaction temperature and the concentration of the tetravalent halogenated titanium compound used.

The concentration of the titanium component fixed on the magnesium compound is advantageously in the range of from 0.005 to 1.5mmol, preferably from 0.03 to 0.8mmol, per litre of dispersing agent or reactor volume. Generally, even higher concentrations are possible.

The organo-aluminium compound B may be reaction products of aluminium-trialkyl or aluminium -dialkyl hydrides with hydrocarbon radicals having 1 to 16 carbon atoms. Other suitable organo-aluminium compounds can be selected from chlorinated organo-aluminium compounds, for example dialkyl-aluminium monochlorides of the formula R₂AlCl or alkyl-aluminium sesquichlorides of the formula R₃Al₂Cl₃, in which formulae R stands for identical or different hydrocarbon radicals, preferably alkyl groups having 1 to 16 carbon atoms.

The organoaluminium may be used in a concentration of from 0.5 to 10mmol per litre of reactor volume.

Optionally, a cocatalyst such as a triethylaluminium (TEAL) is employed in the reactor.

The polymerisation reaction is preferably carried out in two or more serially connected reactors operated under different conditions in order to prepare resins having a bi-or multi-modal-molecular weight distribution.

A metallocene catalyst system may also be used in two or more reactors to prepare the high density resin having a multimodal molecular weight distribution. According to one embodiment according to the present invention, the polyethylene resins are each produced individually in a separate reactor, preferably a loop reactor and they are physically blended with one another for example by extrusion or melt blending.

The final resin has an excellent environmental stress crack resistance (ESCR), a very high stiffness and impact resistance and a very good contact transparency and gloss. It also has good processing capabilities that are similar to those of chromium-based polyethylene resins. More importantly it has an excellent compromise between all these properties.

In addition, the first low density polyethylene component used in the blend according to the present invention has a fairly large melt index, and thus not a very high molecular weight. This allows the very high speed production of bottles having good contact transparency. Up to 10,000 bottles/hour can be produced with the polyethylene blend according to the present invention.

The polyethylene blend is used in blow moulding, injection moulding and injection blow moulding applications as well as in the extrusion of tubes.

Preferably, it is used for preparing articles having a capacity of from 1 mL to 10 litres, preferably from 50 mL to 3 litres.

Because of its good optical properties the resin is suitable for cosmetic or household packaging.

### List of figures.

Figure 1 represents four bottles prepared respectively with a pure bimodal Ziegler-Natta polyethylene resin Finathene BM593 (R2), with a blend comprising 25 wt% of resin R2 and 75 wt% of a metallocene-prepared polyethylene resin Finacene M3509 (R1), with a blend of 50 wt% of R2 and 50 wt% of R1, and with a pure resin R1
Figure 2 represents the molecular weight distributions, determined by gel permeation chromatography, of the starting metallocene and bimodal Ziegler-Natta polyethylene resins and of blends containing respectively 25, 50 and 75 wt% of the bimodal resin.
Figure 3 represents the melt flow index MI2 expressed in dg/min as a function of the percentage of bimodal polyethylene resin expressed in %.
Figure 4 represents a log-log graph of the viscosity expressed in Pa.s as a function of frequency expressed in rad/s.
Figure 5 represents a graph of the gloss expressed in % as a function of the amount of the bimodal polyethylene resin expressed in %.
Figure 6 represents a graph of the haze expressed in % as a function of the amount of the bimodal polyethylene resin expressed in %.
Figure 7 represents a graph of the dynamic compression expressed in newtons as a function of the amount of the bimodal polyethylene resin expressed in %.
Figure 8 represents a graph of the diameter swell expressed in cm as a function of parison length expressed in cm for a die diameter of 2.2 cm.

### Examples.

Several polyethylene blends have been prepared from a metallocene resin R1 sold by ATOFINA Research under the name Finacene^{®} M3509 and a bimodal Ziegler-Natta resin R2 sold by ATOFINA Research under the name Finathene^{®} BM593.

The properties of the starting resins are summarised in Table I.

**TABLE I.**

| Resin | R1 | R2 |
|---|---|---|
| Density (g/cm³) | 0.9345 | 0.9579 |
| MI2 (dg/min) | 0.93 | - |
| HLMI (dg/min) | 28.5 | 27.7 |
| Mn (Da) | 32133 | 12329 |
| Mw (Da) | 81318 | 166544 |
| D | 2.5 | 13.5 |

The blends were prepared by melt blending, using respectively 10 not according to the invention, 25 not according to the invention, 50, 75 and 90 not according to the invention wt% of the bimodal Ziegler-Natta resin R2, the remainder being the metallocene-prepared polyethylene resin R1, and they were pelletised on a Thoret extruder.

Bottles were then prepared on a Krupp Kautex KEB 5-430 blow moulding machine from dry-blended pellets. The bottles' characteristics were as follows:
- weight = 20 g
- capacity = 430 mL
- wall thickness = 0.5 to 0.7 mm.

The blow moulding conditions were as follows:
- screw diam = 40 mm
- tool = 13/12 mm
- screw comprising 11 zones, with temperature varying from 180 °C in zone 1 to 190 °C in zone 3 and remaining at 190 °C from zone 3 to zone 11
- screw head temperature = 190 °C
- mass temperature = 180 °C
- pressure = 232 bars
- extruder speed = 40 rpm
- throughput = 10 kg/h
- couple = 30 amp

The bottles were then tested for contact transparency, gloss, haze, ESCR and dynamic compression.

Gloss was measured following the method of standard test ASTM D 2457-90. Haze was measured following the method of standard test ASTM D1003-2000. ESCR was measured following the method of standard test ASTM D-1693-70 condition B with 100 % antarox (ESCR100).
Dynamic compression was measured following the method of standard test ASTM D 2659-95.

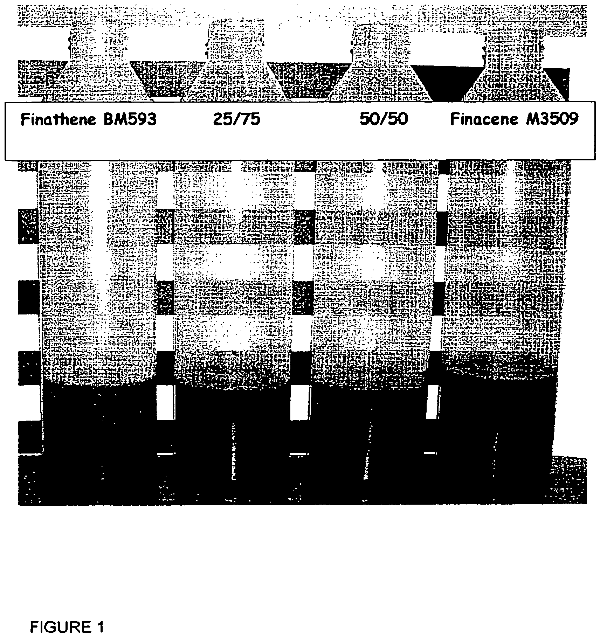

Contact transparency can be seen on Figure 1 which clearly shows that the contact transparency of the bottle prepared with the bimodal resin resin R2 is very poor and that the good contact transparency of the bottle prepared with the metallocene resin R1 is not altered by the addition of bimodal resin R2.

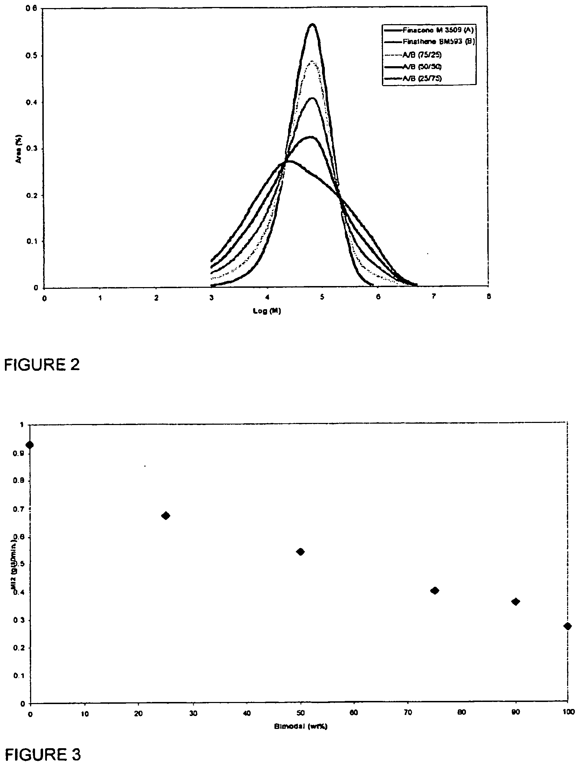

The molecular weight distributions of the starting resins and of several final resins, as determined by gel permeation chromatography (GPC), are represented in Figure 2.

The melt flow index MI2 of the final resin as a function of percentage of the bimodal polyethylene component is represented in Figure 3. It shows a gradual decrease of melt index with increasing amount of the bimodal resin.

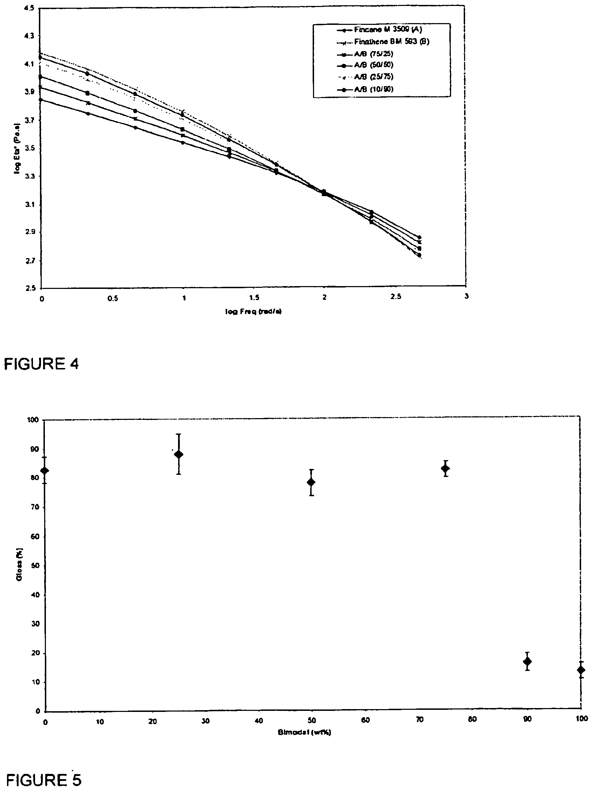

The viscosities of the starting resins and of several blends are represented in Figure 4: it shows a progressive increase in viscosity with increasing amount of bimodal resin at low frequencies.

The gloss results are represented in Figure 5. It can be seen very clearly that the excellent gloss properties, generally associated with metallocene-prepared polyethylene resins, remain excellent for amounts of added bimodal polyethylene resin of up to 80 wt%.

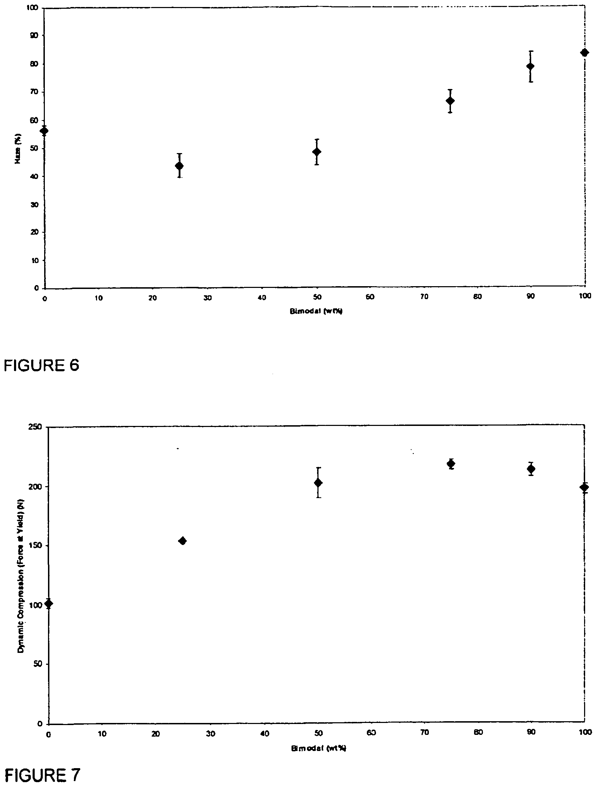

More interestingly, the haze values, known to be excellent for metallocene-prepared polyethylene resins, show a marked improvement for amounts of added bimodal polyethylene of up to 50 wt% and remain equivalent to those of metallocene-prepared resins for amounts of added bimodal polyethylene resin of up to 80 wt%. This can be seen in Figure 6.

The dynamic compression increases with increasing amounts of bimodal polyethylene resin, up to amounts of bimodal resin of 90 wt% as can be seen in Figure 7.

Chromium-based resin Lacqtene^{®} 2002 TH40 commercialised by ATOFINA (resin R3) has been used for comparison. It has a density of 0.940 g/cm³, that is equivalent to that of a blend comprising 25 wt% of resin R1 and 75 wt% of resin R2. The gloss value of the chromium-based resin is of 10% and its haze value is of 75 % as compared with values for the blend respectively of 90 % and 45 %.

A resin blend comprising 50 wt% of resin R1 and 50 wt% of resin R2 and having a density of 0.947 g/cm³ was compared for gloss, haze and ESCR with a metallocene-prepared polyethylene resin sold by ATOFINA Research under the name Finacene^{®} ER2263 (resin R4) having the same density of 0.947 g/cm³. The results are displayed in Table II.

**TABLE II.**

| Resin | R4 | 50 wt% R1 + 50 wt% R2 |
|---|---|---|
| ESCR100 (h) | 20 | > 1000 |
| gloss (%) | 60 | 80 |
| haze (%) | 65 | 48 |

It can thus be seen that a resin that is normally known to have excellent ESCR and gloss properties loses its good performances for densities larger than 0.940 g/cm³ typical of the densities of the blends according to the present invention.

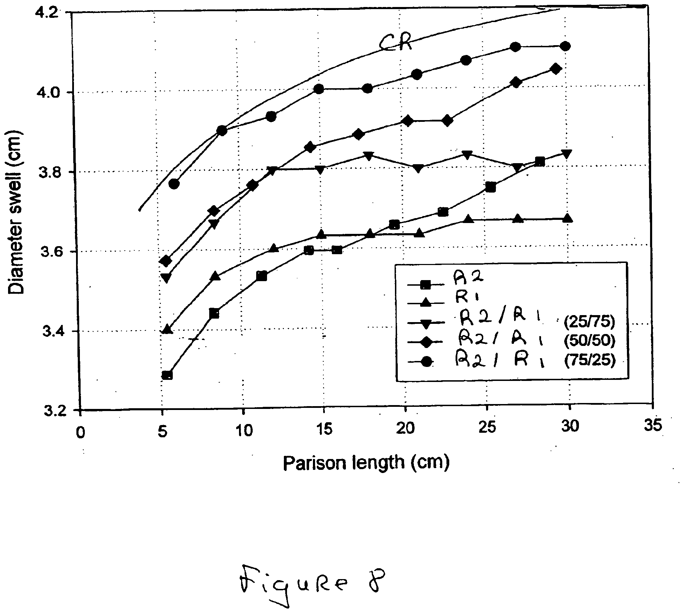

It was also observed that although swell increased and sag decreased with increasing amounts of the Ziegler-Natta resin, yet the change was not linear, it can be seen in Figure 8 that the diameter swell of blends prepared with various proportions of resins R1 and R2 falls outside the range of swells of either resin taken alone. The blend prepared with 75 wt% of resin R2 (Ziegler-Natta) and 25 wt% of resin R1 (metallocene) closely resembles that of a chromium-based resin (CR).

The blends of the present invention thus offer the most advantageous compromise of gloss, contact transparency, ESCR, strength and processability.

## Claims

1. A process for preparing a polyethylene resin composition having a multimodal molecular weight distribution that comprises the steps of:
(i) providing from 20 to 50 wt% of a first metallocene-produced linear low density polyethylene (mLLDPE) resin having a density of from 0.920 to 0.940 g/cm³ and a melt index MI2 of from 0.1 to 10 dg/min;
(ii) providing from 50 to 80 wt% of a second bi- or multi-modal polyethylene resin prepared either with a Ziegler-Natta or with a metallocene catalyst system, said polyethylene having a density ranging from 0.940 to 0.970 g/cm³ and a melt index MI2 of from 0.05 to 10 dg/min;
(iii) physically blending together the first and second polyethylenes to form a polyethylene resin having a multimodal molecular weight distribution, a density ranging from 0.935 to 0.960 g/cm³ and a MI2 of from 0.2 to 0.9 dg/min
with the melt index MI2 measured by the procedure of ASTM D 1238 using a load of 2.16 kg at a temperature of 190°C and the density measured at 23°C by the procedures of standard test ASTM D 1505.

2. The process according to claim 1 wherein the first mLLDPE has a density of not more than 0.935 g/cm³.

3. The process of claim 1 or claim 2 wherein the first mLLDPE has a melt flow index MI of from 0.5 to 5 dg/min

4. The process according to any one of claims 1 to 3 wherein the second polyethylene resin has a bimodal molecular weight distribution.

5. The process according to claim 4 wherein the second polyethylene resin is produced with a Ziegler-Natta catalyst system.

6. The process according to any one of the preceding claims wherein the amount of each polyethylene component in the blend is of about 50 wt%.

7. The process according to any one of the preceding claims wherein the metallocene catalyst component used to prepare the mLLDPE is ethylene bis(4,5,6,7-tetrahydro-1-indenyl) zirconium dichloride.

8. Use of the polyethylene composition prepared according to any one of claims 1 to 7 in blow molding, injection molding, injection blow molding or tube extrusion applications.

9. Use of the polyethylene resin prepared according to any one of claims 1 to 7 for preparing articles having a good balance of ESCR, rigidity, contact transparency and gloss.

10. Use of the polyethylene resin prepared according to any one of claims 1 to 7 for the high speed production of bottles.

11. Cosmetic or household packaging produced with the polyethylene composition prepared according to any one of claims 1 to 7.

## Patentansprüche

1. Verfahren zum Herstellen einer Polyethylenharzzusammensetzung mit einer multimodalen Molekulargewichtsverteilung, wobei das Verfahren die folgenden Schritte umfasst:
(i) Bereitstellen von 20 bis 50 Gew.-% eines ersten mLLDPE-(metallocenproduziertes lineares Polyethylen mit geringer Dichte)-Harzes mit einer Dichte von 0,920 bis 0,940 g/cm³ und einem Schmelzindex MI2 von 0,1 bis 10 dg/Min.;
(ii) Bereitstellen von 50 bis 80 Gew.-% eines zweiten bi- oder multimodalen Polyethylenharzes, das entweder mit einem Ziegler-Natta- oder einem Metallocen-Katalysatorsystem hergestellt ist, wobei das Polyethylen eine Dichte im Bereich von 0,940 bis 0,970 g/cm³ und einen Schmelzindex MI2 von 0,05 bis 10 dg/Min. aufweist;
(iii) physikalisches Vermischen der ersten und zweiten Polyethylene, um ein Polyethylenharz mit einer multimodalen Molekularg ewichtsverteilung, einer Dichte im Bereich von 0,935 bis 0,960 g/cm³ und einem MI2 von 0,2 bis 0,9 dg/Min. zu bilden,
wobei der Schmelzindex MI2 mit dem Verfahren nach ASTM D 1238 unter einer Last von 2,16 kg bei einer Temperatur von 190 °C und die Dichte bei 23 °C mit den Verfahren nach Standardtest ASTM D 1505 gemessen werden.

2. Verfahren nach Anspruch 1, wobei das erste mLLDPE eine Dichte aufweist, die 0,935 g/cm³ nicht übersteigt.

3. Verfahren nach Anspruch 1 oder 2, wobei das erste mLLDPE einen Schmelzflussindex MI von 0,5 bis 5 dg/Min. aufweist.

4. Verfahren nach einem der Ansprüche 1 bis 3, wobei das zweite Polyethylenharz eine bimodale Molekulargewichtsverteilung aufweist.

5. Verfahren nach Anspruch 4, wobei das zweite Polyethylenharz mit einem Ziegler-Natta-Katalysatorsystem produziert wird.

6. Verfahren nach einem der vorstehenden Ansprüche, wobei sich die Menge an jeder Polyethylenkomponente in der Mischung auf ungefähr 50 Gew.-% beläuft.

7. Verfahren nach einem der vorstehenden Ansprüche, wobei die Metallocen-Katalysatorkomponente, die zur Herstellung des mLLDPE verwendet wird, Ethylen-bis(4,5,6,7-tetrahydro-1 -indeynl)-zirkoniumdichlorid ist.

8. Verwendung der nach einem der Ansprüche 1 bis 7 hergestellten Polyethylenzusammensetzung bei Blasform-, Spritzgussform-, Spritzblasform- oder Schlauchextrusionsverfahren.

9. Verwendung des nach einem der Ansprüche 1 bis 7 hergestellten Polyethylenharzes zur Herstellung von Artikeln mit einem gut ausgeglichenen Verhältnis von ESCR, Steife, Kontakttransparenz und Glanz.

10. Verwendung des nach einem der Ansprüche 1 bis 7 hergestellten Polyethylenharzes zur Hochgeschwindigkeitsproduktion von Flaschen.

11. Kosmetische oder Haushaltsverpackung, die mit der nach einem der Ansprüche 1 bis 7 produzierten Polyethylenzusammensetzung hergestellt ist.

## Revendications

1. Procédé de préparation d'une composition de résine de polyéthylène présentant une distribution multimodale du poids moléculaire qui comprend les étapes consistant à :
(i) fournir de 20 à 50 % en poids d'une première résine de polyéthylène linéaire basse densité produit en utilisant un métallocène (mLLDPE) ayant une densité de 0,920 à 0,940 g/cm³ et un indice de fluidité à chaud M12 de 0,1 à 10 dg/min ;
(ii) fournir de 50 à 80 % en poids d'une deuxième résine de polyéthylène bi- ou multi-modale préparée avec un système catalytique soit de type Ziegler-Natta soit à base de métallocènes, ledit polyéthylène ayant une densité variant de 0,940 à 0,970 g/cm³ et un indice de fluidité à chaud MI2 de 0,05 à 10 dg/min ;
(iii) mélanger physiquement le premier et le deuxième polyéthylène pour former une résine de polyéthylène présentant une distribution multimodale du poids moléculaire, une densité variant de 0,935 à 0,960 g/cm³ et un indice MI2 de 0,2 à 0,9 dg/min
l'indice de fluidité à chaud MI2 étant mesuré par la procédure de la norme ASTM D 1238 en utilisant une charge de 2,16 kg à une température de 190 °C et la densité étant mesurée à 23 °C par les procédures d'essai de la norme ASTM D 1505.

2. Procédé selon la revendication 1, dans lequel le premier mLLDPE a une densité n'excédant pas 0,935 g/cm³.

3. Procédé selon la revendication 1 ou la revendication 2, dans lequel le premier mLLDPE a un indice de fluage MI de 0,5 à 5 dg/min.

4. Procédé selon l'une quelconque des revendications 1 à 3, dans lequel la deuxième résine de polyéthylène a une distribution bimodale du poids moléculaire.

5. Procédé selon la revendication 4, dans lequel la deuxième résine de polyéthylène est produite avec un système catalytique de type Ziegler-Natta.

6. Procédé selon l'une quelconque des revendications précédentes, dans lequel la quantité de chaque composant du polyéthylène dans le mélange est d'environ 50 % en poids.

7. Procédé selon l'une quelconque des revendications précédentes, dans lequel le composant de catalyseur à base de métallocène utilisé pour préparer le mLLDPE est du dichlorure d'éthylène-bis(4,5,6,7-tétrahydro-1-indényl)-zirconium.

8. Utilisation de la composition de polyéthylène préparée selon l'une quelconque des revendications 1 à 7 dans les applications de moulage par extrusion-soufflage, moulage par injection, moulage par injection-soufflage ou extrusion de tubes.

9. Utilisation de la résine de polyéthylène préparée selon l'une quelconque des revendications 1 à 7 pour préparer des articles présentant un bon équilibre entre la RFCE (résistance à la fissuration sous contrainte environnementale), la rigidité, la transparence de contact et le brillant.

10. Utilisation de la résine de polyéthylène préparée selon l'une quelconque des revendications 1 à 7 pour la production ultra-rapide de bouteilles.

11. Emballage cosmétique ou ménager produit avec la composition de polyéthylène préparée selon l'une quelconque des revendications 1 à 7.
